# EUROPEAN PATENT APPLICATION

(11) **EP 4 796 482 A1**
(43) Date of publication of application: **26.08.2026**
(21) Application number: 26159466.7
(22) Date of filing: 19.02.2026
(51) Int. Cl.: B65H 51/16, B65H 57/00, B23K 20/00

(54) **PNEUMATIC WIRE THREADING DEVICE AND METHOD**

(30) Priority: 25.02.2025 US 202519062507; 10.02.2026 US 202619535461
(71) Applicant: ASMPT Singapore Pte. Ltd., Singapore 768924 (SG)
(72) Inventor: ZHANG, Yue, Singapore 768924 (SG)
(74) Representative: Emerson, Peter James

(57) **Abstract**

A wire threading device (100) for automatically threading a bonding wire (50) in a wire bonding apparatus (10) includes a wire guiding block (110, 120, 130) configured to form a guiding channel (110a, 120a, 130a) for directing a bonding wire (50) during a threading process and a slot (110b, 120b, 130b) connected to the guiding channel (110a, 120a, 130a) to release the bonding wire (50) after the threading process, wherein wire guiding block (110, 120, 130) is positioned between an air tensioner (11) and a bonding tool (15) of the wire bonding apparatus (10) in use to guide the bonding wire (50) from the air tensioner (11) to the bonding tool (15), and a pneumatic wire pulling mechanism comprising a plurality of air channels (121b, 122b) extending in directions that intersect an axial direction of the guiding channel, the pneumatic wire pulling mechanism being configured to apply a plurality of pulling forces on the bonding wire via the air channels, enabling the bonding wire to be pulled into and through the guiding channel during the threading process.

## Description

### Field of the Invention

The invention generally relates to wire threading in a wire bonding apparatus, and in particular to an automatic wire threading device equipped with a pneumatic wire pulling mechanism.

### Background

Wire bonding is a key process in semiconductor packaging for establishing electrical connections between an integrated circuit (IC) chip and its package via conductive bonding wires, typically made of gold, aluminum, or copper. In ultrasonic wire bonding, a bonding wire fed from a spool is threaded into the capillary of an ultrasonic transducer, where ultrasonic energy and force are applied at the capillary tip to weld the bonding wire to a bonding pad.

The wire threading process must be performed each time the spool of bonding wire is replaced or whenever the bonding wire escapes from the capillary. During this process, the bonding wire needs to be re-threaded from the spool, through intermediate equipment, and into the capillary. Existing wire threading processes require substantial manual effort and a skilled operator, as it involves the delicate handling of the bonding wire.

Although various automatic wire threading methods have been proposed in the prior art, they often face limitations in efficiency, reliability, and accuracy. For instance, US9397066B2 discloses a wire feed system with a wire clamp positioned between an air tension unit and the capillary of a wire bonding apparatus to guide the bonding wire during a wire threading process. However, the threading process suffers from constraints, as it relies solely on the wire clamp to facilitate threading between the air tensioner and the capillary. The movement and positioning of the wire clamp are further restricted by the two wire clamps located between the air tensioner and the capillary, limiting overall threading performance. Some prior art wire threading devices incorporate multiple wire guiding members to direct the bonding wire between the air tensioner and the capillary. However, due to their designs, the bonding wire can easily slip or fly out of the guiding members during the threading process, compromising effectiveness and reliability.

**It** would therefore beneficial to provide an improved wire threading device for a wire bonding apparatus.

### Summary of the Invention

**It** is thus an object of the invention to seek to provide an automatic wire threading device for threading a bonding wire through a bonding tool of a wire bonding apparatus, which is strategically positioned between an air tensioner and the bonding tool of the wire bonding apparatus to improve efficiency, reliability, and accuracy of the threading process.

According to a first aspect of the present invention, there is provided a device for automatically threading wire in a wire bonding apparatus. The device includes a wire guiding block configured to form a guiding channel for directing a bonding wire during a threading process and a slot connected to the guiding channel to release the bonding wire from the guiding channel after the threading process, the wire guiding block being positioned between an air tensioner and a bonding tool of the wire bonding apparatus in use to guide the bonding wire from the air tensioner to the bonding tool, and a pneumatic wire pulling mechanism comprising a plurality of air channels extending in directions that intersect an axial direction of the guiding channel in the wire guiding block, the pneumatic wire pulling mechanism being configured to apply a plurality of pulling forces on the bonding wire via the plurality of air channels, enabling the bonding wire to be pulled into and through the guiding channel during the threading process. **In** some embodiments, the plurality of air channels are arranged to extend in directions perpendicular or substantially perpendicular to the axial direction of the guiding channel in the wire guiding block.

With the plurality of air channels formed in the wire guiding block, the pneumatic wire pulling mechanism can apply balanced pulling forces on the bonding wire during the wire threading process. These balanced pulling forces ensure that the bonding wire is conveyed in a direction substantially parallel to the axial direction of the guiding channel, effectively preventing the bonding wire from flying out through the slot. As a result, the efficiency, reliability and accuracy of the wire threading process can be significantly enhanced.

According to a second aspect of the present invention, there is provided an automatic wire threading device. The wire threading device includes a first wire guiding block configured to form a first guiding channel for directing a bonding wire during a threading process and a first slot connected to the first guiding channel to release the bonding wire from the first guiding channel after the threading process, the first wire guiding block being positioned between the air tensioner and a first wire clamp in use, a second wire guiding block configured to form a second guiding channel for directing the bonding wire during the threading process and a second slot connected to the second guiding channel to release the bonding wire from the second guiding channel after the threading process, the second wire guiding block being positioned between the first wire clamp and a second wire clamp in use, a third wire guiding block configured to form a third guiding channel for directing the bonding wire during the threading process and a third slot connected to the third guiding channel to release the bonding wire from the third guiding channel after the threading process, the third wire guiding block being positioned between the second wire clamp and the bonding tool of the wire bonding apparatus in use, and a pneumatic wire pulling mechanism comprising first and second air channels extending in directions that intersect an axial direction of the first guiding channel in the first wire guiding block and/or third and fourth air channels extending in directions that intersect an axial direction of the second guiding channel in the second wire guiding block, the pneumatic wire pulling mechanism being configured to apply a plurality of pulling forces on the bonding wire via the first and second, and/or third and fourth air channels, enabling the bonding wire to be pulled into and through the guiding channels during the threading process. In some embodiments, the air channels may be arranged to extend in directions substantially perpendicular to the axial direction of the guiding channels.

According to a third aspect of the present invention, there is provided a method for automatically threading wire in a wire bonding apparatus. The method includes the steps of providing a wire threading device that comprises a wire guiding block forming a guiding channel and a slot connected to the guiding channel and a pneumatic wire pulling mechanism comprising a plurality of air channels extending in directions that intersect an axial direction of the guiding channel in the wire guiding block, positioning the wire guiding block at an operation position between an air tensioner and a bonding tool of the wire bonding apparatus to guide a bonding wire through the guiding channel during a threading process, applying a plurality of pulling forces on the bonding wire with the pneumatic wire pulling mechanism via the plurality of air channels to pull the bonding wire into and through the guiding channel during the threading process, and moving the wire guiding block away from the operation position and releasing the bonding wire via the slot.

These and other features, aspects, and advantages will be better understood with regard to the description section, appended claims, and accompanying drawings.

### Brief Description of the Drawings

Embodiments of the present invention will now be described, by way of example only, with reference to the accompanying drawings, in which:
FIG. 1 is a perspective view of a wire bonding apparatus including a wire threading device for automatically threading a bonding wire through a bonding tool of the wire bonding apparatus, according to a first embodiment of the invention;
FIG. 2A is a perspective view of the wire threading device depicted in FIG. 1; FIG. 2B is a perspective view of a first part of a middle wire guiding block of the wire threading device and FIG. 2C is a perspective view of the middle wire guiding block; FIG. 2D is a cross-sectional view of the middle wire guiding block according to one embodiment of the invention; FIG. 2E is a cross-sectional view of the pneumatic wire pulling mechanism within the middle wire guiding block;
FIG. 3A to FIG. 3F illustrate the main steps performed by the wire threading device shown in FIG. 1 during the threading of a bonding wire through the wire bonding apparatus, according to one embodiment of the invention;
FIG. 4A is a perspective view of a wire bonding apparatus including a wire threading device for automatically threading a bonding wire through the bonding tool of the wire bonding apparatus according to a second embodiment of the invention; FIG. 4B and FIG. 4C respectively show perspective and sectional views of the wire threading system depicted in FIG. 4A; FIG. 4D schematically illustrates a sectional view of a first wire guiding block in the wire threading device shown in FIG. 4A;
FIG. 5A to FIG. 5G illustrate the main steps performed by the wire threading device during the threading of a bonding wire through the wire bonding apparatus, according to the one embodiment of the invention.

**In** the drawings, like parts are denoted by like reference numerals.

### Detailed Description of the Preferred Embodiments of the Invention

Before discussing embodiments of the invention in any more detail, first an overview will be provided. To improve the accuracy, reliability and efficiency of a wire threading process for a wire bonding apparatus, a movable pneumatic wire threading device is provided, which is strategically positioned between the air tensioner and the bonding tool of the wire bonding apparatus during the threading process, for automatically threading the bonding wire from the air tensioner through the bonding tool via two wire clamps of the wire bonding apparatus.

According to certain embodiments of the invention, the wire threading device includes a wire guiding block and a pneumatic wire pulling mechanism. The wire guiding block is configured to form a guiding channel for directing a bonding wire during a threading process and a slot connected to the guiding channel to release the bonding wire from the guiding channel after the threading process. The pneumatic wire pulling mechanism includes a plurality of air channels extending in directions that intersect an axial direction of the guiding channel in the wire guiding block and is configured to apply balanced pulling forces on the bonding wire via the plurality of air channels, enabling the bonding wire to be pulled into and through the guiding channel formed by the wire guiding block during the threading process. The angles formed between the directions of the air channels and the axial direction of the guiding channel may range from 30° to 90°. Preferably, the plurality of air channels are arranged to extend in directions perpendicular or substantially perpendicular to the axial direction of the guiding channel.

The plurality of air channels of the pneumatic wire pulling mechanism can be arranged in various configurations to ensure balanced pulling forces on the bonding wire. To prevent the bonding wire from being damaged by strong airflow, the pneumatic wire pulling mechanism is configured to regulate the flow rate in each air channel to a maximum of 5L/min.

In some embodiments, the pneumatic wire pulling mechanism may include a pair of air channels symmetrically arranged relative to the guiding channel in the wire guiding block. This symmetrical arrangement enables the application of pulling forces from different directions, ensuring balanced tension on the bonding wire. By generating an airflow with substantially equal flow rates through both air channels, the mechanism effectively pulls the bonding wire into and through the guiding channel with improved stability and precision.

In some embodiments, the pair of air channels may be arranged to have the same dimensions and shape.

In some embodiments, each air channel may be arranged to have a first section extending along a first direction and a second section extending along a second direction substantially perpendicular to the first direction. In other words, each air channel is arranged in an L-shape. Both the first direction and the second direction extend at angles relative to the axial direction of the guiding channel and are preferably oriented substantially perpendicular to the axial direction of the guiding channel. This L-shape design can help regulate airflow within the air channels, ensuring a more controlled and consistent pneumatic pulling effect. For example, the flow rate in each air channel may be adjusted by changing the dimensions of the first section and/or second section thereof.

To further improve the control of the flow rate in the air channels, the pneumatic wire pulling mechanism may further include at least one airflow regulator positioned in one or both of the air channels to control the flow rate therein. In one example, each airflow regulator may include a stopper portion that is insertable into the corresponding air channel to adjust a size of an air passage therein.

To prevent unnecessary stress on the bonding wire, the pneumatic wire pulling mechanism is configured to regulate the flow rates in the air channels, ensuring they do not exceed 5 L/min.

To prevent the bonding wire from flying out of the guiding channel during the threading process, at least one wire guiding block within the wire threading device may be designed to include two separate parts. At least one part is movable relative to the other between a first position where the slot of the wire guiding block is open and a second position where the slot is closed, wherein the device further comprises an actuation mechanism coupled to the wire guiding block and configured to move at least one part relative to the other.

In some embodiments, the actuation mechanism may include a rotary shaft couped to the wire guiding block, which allows one part of the wire guiding block to move relative to the other. Alternatively, the actuation mechanism may include an elastic component coupled to the wire guiding block and an actuation air channel formed in the wire guiding block. The elastic component is deformable by compressed air input through the actuation air channel to open or close the slot of the wire guiding block. The elastic component may include a spring or leaf spring.

To further prevent the bonding wire from easily flying out of the guiding channel, the wire threading device may also include a motion controller which is configured to position the wire guiding block at an operation position between the air tensioner and the bonding tool before threading such that there is an offset angle between an opening direction of the slot and opening directions of the first and second wire clamps of the wire bonding apparatus. By ensuring that the opening direction of the slot is not aligned with those of the wire clamps, this configuration effectively prevents the bonding wire from escaping the guiding channel during the threading process. In one example, the offset angle between the opening direction of the slot and those of the wire clamps is substantially 90 degrees. In other words, the opening direction of the slot is substantially perpendicular to the opening directions of the wire clamps.

To facilitate the threading process, the wire threading device may further include a vacuum suction device connected to the bonding tool and configured to exert a drawing force on the bonding wire during the threading process.

In some embodiments, the wire guiding block may be positioned in different operation positions between the air tensioner and the bonding tool of the wire bonding apparatus. In some embodiments, the wire threading device may include a plurality of wire guiding blocks which are respectively positioned in different operation positions between the air tensioner and the bonding tool during a threading process. The different operation positions may include a first operation position between the air tensioner and a first wire clamp, a second operation position between the first wire clamp and a second wire clamp and a third operation position between the second wire clamp and the bonding tool of the wire bonding apparatus. The plurality of wire guiding blocks may be mutually coupled after forming each of them separately or may be formed as a single component. To further enhance the performance of the wire threading device, multiple pneumatic wire pulling mechanisms may be incorporated. Specifically, at least two wire guiding blocks within the device are equipped with respective pneumatic wire pulling mechanisms, ensuring more effective and reliable wire threading.

The details of the wire threading device according to some embodiments of the invention will be described in conjunction with the accompanying drawings.

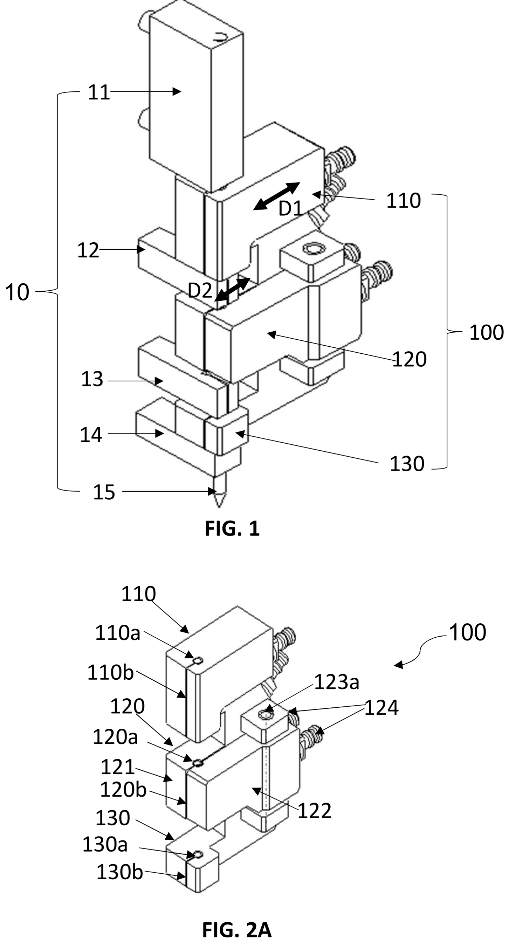

FIG. 1 is a perspective viw of a wire bonding apparatus including a wire threading device 100 for automatically threading a bonding wire through a bonding tool 15 of the wire bonding apparatus 10 according to a first embodiment of the invention.

Referring to FIG. 1, the wire bonding apparatus 10 includes an air tensioner 11, first wire clamp 12, second wire clamp 13, a transducer 14, and the bonding tool 15 attached to the transducer 14. The bonding tool 15 is in the form of a capillary. The wire threading device 100 is configured to receive a bonding wire passing through the air tensioner 11, and to thread it through the bonding tool 15 via the first and second wire clamps 12 and 13.

The wire threading device 100 is a key component of a wire threading system designed for the wire bonding apparatus 10. The wire threading system is configured to automatically thread the bonding wire from a wire spool through the bonding tool 15, passing sequentially via the air tensioner 11, the first wire clamp 12 and the second wire clamp 13. The wire threading system may also include other components or devices (not shown) for conveying the bonding wire to the air tensioner 11 for conducting wire threading.

The wire threading device 100 includes an upper wire guiding block 110, a middle wire guiding block 120 connected to the upper wire guiding block 110 and a lower wire guiding block 130 connected to the middle wire guiding block 120. As shown in FIG. 1, during a threading process, the wire threading device 100 is positioned between the air tensioner 11 and the bonding tool 15 of the wire bonding apparatus 10. More specifically, the upper wire guiding block 110 is positioned at a first operation position between the air tensioner 11 and the first wire clamp 12, the middle wire guiding block 120 is positioned at a second operation position between the first wire clamp 12 and the second wire clamp 13, and the lower wire guiding block 130 is positioned at a third operation position between the second wire clamp 13 and the bonding tool 15.

The wire threading device 100 may further include a motion controller operative to move the three guiding blocks along directions D1 for positioning it between the air tensioner 11 and the bonding tool 15. The directions D1 are parallel to the opening and closing directions D2 of the first and second wire clamps 12, 13. The opening direction refers to the gripping direction of the first and second wire clamps 12, 13.

FIG. 2A is a perspective view of the wire threading device 100. The upper wire guiding block 110 is configured to form an upper guiding channel 110a for directing a bonding wire during a threading process and an upper slot 110b connected to the upper guiding channel 110a to release the bonding wire from the upper guiding channel 110a after the threading process. The middle wire guiding block 120 is configured to form a middle guiding channel 120a for directing the bonding wire during the threading process and a middle slot 120b connected to the middle guiding channel 120a to release the bonding wire from the middle guiding channel 120a after the threading process. The lower wire guiding block 130 is configured to form a lower guiding channel 130a for directing the bonding wire during the threading process and a lower slot 130b connected to the lower guiding channel 130a to release the bonding wire from the lower guiding channel 130a after the threading process.

During a threading process, the upper, middle and lower guiding channels, 110a, 120a and 130a, are aligned with the through apertures or holes of the air tensioner 11, the first and second wire clamps 12, 13 and the bonding tool 15 such that a complete guiding passage is established between the air tensioner 11 and the bonding tool 15.

Referring to FIG. 2A, the middle wire guiding block 120 includes a first part 121 and a second part 122. The second part 122 is movable relative to the first part 121 between a first position where the middle slot 120b is open and a second position where the middle slot 120b is closed. The opening or closing direction of the middle slot 120b is perpendicular to the opening and closing directions D2 of the first wire clamp 12 and second wire clamp 13. In this embodiment, the middle slot 120b may be closed to prevent the bonding wire from flying out during the threading process. The upper and lower slots, 110b, 130b may remain open throughout the entire threading process. It should be understood that this arrangement is for illustrative purposes only and is not intended to limit the scope of the invention. In other embodiments, more than one of the slots may be closed.

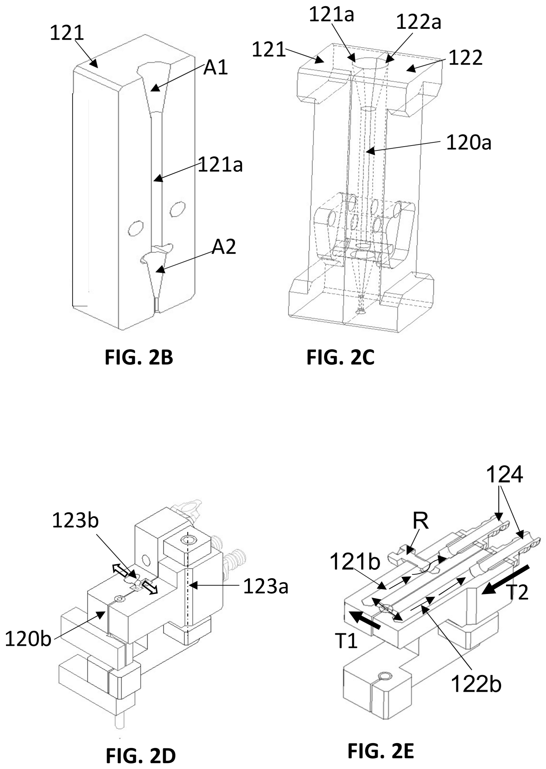

FIG. 2B and FIG. 2C respectively are perspective views of the first part 121 and the middle wire guiding block 120 according to one embodiment of the invention. Referring to FIG. 2B, the first part 121 has a first groove 121a with a tapered top portion A1 and a tapered bottom portion A2. The tapered top portion A1 has a wider opening to facilitate the smooth guidance of the bonding wire into the middle guiding channel 120a. The tapered bottom portion A2 has a narrower opening at its end for precisely guiding the bonding wire to the second wire clamp 13. Referring to FIG. 2C, the second part 122 has a second groove 122a similar to the first groove 121a. The second part 122 is movable relative to the first part 121 between the first position where the first groove 121a and the second groove 122a align and contact each other to close the middle slot 120b and the second position where the first groove 121a and the second groove 122a separate to form the middle slot 120b to allow the bonding wire to be released after the threading process.

The wire threading device 100 also includes an actuation mechanism coupled to the second part 122, enabling it to move between the first and second positions to respectively close and open the middle slot 120b. FIG. 2D is a cross-sectional view of the middle wire guiding block 120. As shown in FIG. 2A and FIG. 2D, the actuation mechanism includes a rotary shaft 123a and an actuator 123b. The actuator 123b is configured to move the second part 122 between the first position and the second position. The second part 122 is mounted on the rotary shaft 123a, allowing it to rotate about the rotary shaft 123a and move between the first and the second positions.

The wire threading device 100 also includes a pneumatic wire pulling mechanism. FIG. 2E illustrates a cross-sectional view of the pneumatic wire pulling mechanism in the middle wire guiding block 120 according to one embodiment of the invention. Referring to FIG. 2E, the pneumatic wire pulling mechanism includes first and second air channels, 121b, 122b formed in the first and second parts, 121, 122 respectively. These two air channels are arranged along directions substantially perpendicular to the axial direction of the middle guiding channel 120a in the middle wire guiding block 120. Each air channel has a first section extending along a first direction T1 and a second section extending along a second direction T2. The second direction T2 is perpendicular to the first direction T1.

These air channels are connected to at least one air generator (not shown) through two connectors 124. The two connectors 124 are attached to the first and second parts, 121, 122 respectively. During a wire threading process, the pneumatic wire pulling mechanism is configured to apply balanced pulling forces on the bonding wire via the two air channels, enabling the bonding wire to be pulled into and through the middle guiding channel 120b during the threading process. Specifically, this pneumatic wire pulling mechanism is operative to generate an airflow with substantially equal flow rates in the first and second air channels, 121b, 122b to apply balanced pulling forces on the bonding wire, thereby pulling the wire into and through the middle guiding channel 120b.

As shown in FIG. 2E, the pneumatic wire pulling mechanism further includes an airflow regulator R positioned in the first air channel 121b to control the flow rate therein. The airflow regulator R includes a movable stopper portion that can be inserted into the first air channel 121b to adjust the size of an airpath therein. The stopper portion may be configured to move relative to the first air channel 121b in a direction perpendicular to the direction T2, thereby adjusting a size of the airpath in the second section of the first air channel 121b. **In** other embodiments, at least one airflow regulator may be positioned in the second air channel 122b to control the flow rate therein.

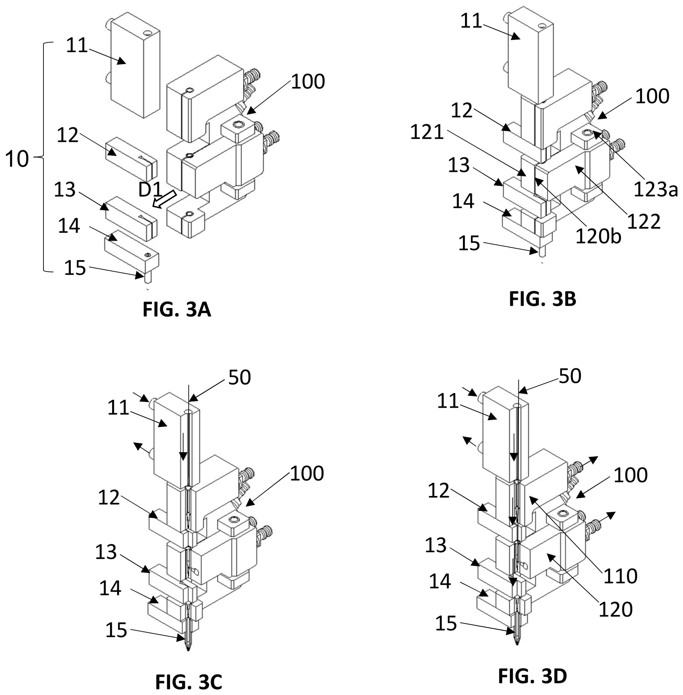

FIG. 3A to FIG. 3F illustrate the main steps performed by the wire threading device 100 during the threading of a bonding wire 50 through the wire bonding apparatus, according to one embodiment of the invention.

In FIG. 3A, a motion controller moves the wire threading device 100 from its standby position to its operational position along the direction D1. Specifically, the wire threading device 100 is positioned at its operation position such that the upper wire guiding block 110 is inserted into a first operation position between the air tensioner 11 and the first wire clamp 12, the lower wire guiding block 120 is inserted into a second operation position between the first and second wire clamps, 12, 13 and the lower guiding block 130 is inserted into a third operation position between the second wire clamp 13 and the bonding tool 15.

To prevent the bonding wire from flying out of the wire threading device 100 or the first and second wire clamps, 12, 13 the wire threading device 100 is positioned at its operational location such that there is an offset angle between the movement direction of the second part 122 between the first and second positions and the gripping direction of the first and second wire clamps, 12, 13 for gripping the bonding wire 50. The offset angle may range from 10 degrees to 90 degrees. The movement direction of the second part 122 refers to the opening and closing position of the middle slot 120b and the gripping direction of the first and second wire clamps refers to the opening and closing directions of the wire clamps.

In FIG. 3B, the second part 122 of the middle wire guiding block 120 rotates about the rotary shaft 123a to move relative to the first part 121 to close the middle slot 120b. Specifically, the second part 122 is actuated to move from a first position where the middle slot 120b is open to a second position where the middle slot 120b is closed. In this embodiment, the initial position of the second part 122 is the first position where the second part 122 is open.

In FIG. 3C, the bonding wire 50 is threaded through the air tensioner 11.

In FIG. 3D, the pneumatic wire pulling mechanism coupled to the middle wire guiding block 120 is turned on to receive the bonding wire 50 from the air tensioner 11 and guide it into and through the guiding channels formed by the upper wire guiding block 110, middle wire guiding block 120 and lower wire guiding block 130. If the wire threading device 100 further includes an upper pneumatic wire pulling mechanism coupled to the upper wire guiding block 110, the upper pneumatic wire pulling mechanism is also turned on to pull the bonding wire into and through the guiding channels formed by the wire threading device 100. The two pneumatic wire pulling mechanisms may be turned on simultaneously or sequentially.

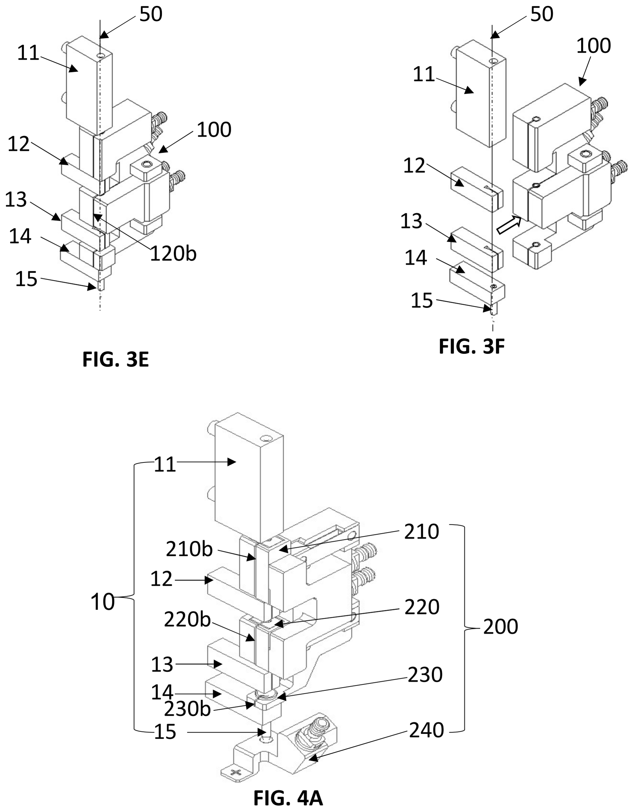

In FIG. 3E, the first and second wire clamps, 12, 13 are operative to clamp the bonding wire 50 after it is threaded through the bonding tool 15. The pneumatic wire pulling mechanism is turned off and the middle slot 120b of the middle wire guiding block 120 is opened by moving the second part 122 from the second position to the first position.

In FIG. 3F, the wire threading device 100 releases the bonding wire 50 via the upper slot 110b, the opened middle slot 120b and the lower slot 130b and moves from its operation location back to its standby position.

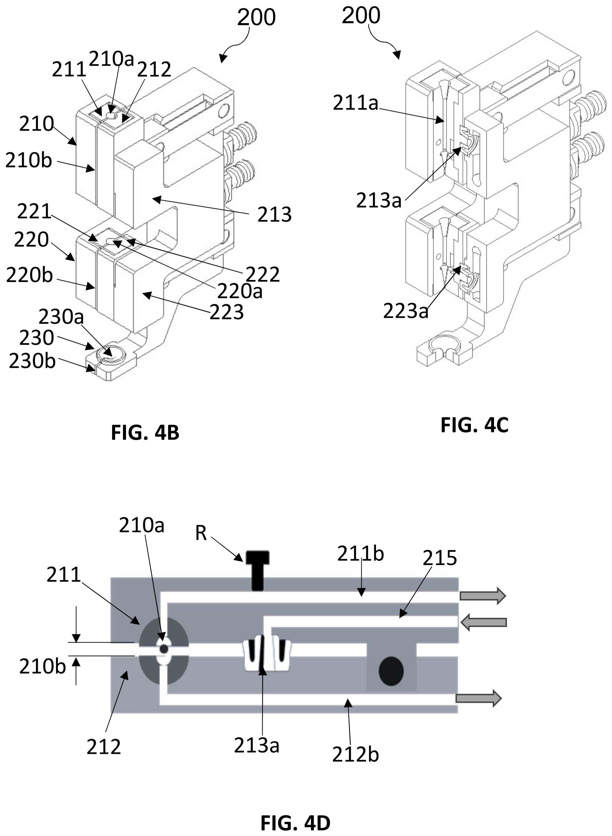

FIG. 4A is a perspective view of a wire bonding apparatus including a wire threading device 200 for automatically threading a bonding wire through the bonding tool 15 of the wire bonding apparatus 10 according to a second embodiment of the invention. FIG. 4B and FIG. 4C respectively show perspective and sectional views of the wire threading system 200.

As shown in FIG. 4A to FIG. 4B, the wire threading device 200 includes a first wire guiding block 210, a second wire guiding block 220 and a third wire guiding block 230. These three blocks are arranged sequentially to guide the bonding wire from the air tensioner 11 through the first and second wire clamps, 12, 13 and ultimately to the bonding tool 15. Each wire guiding block is configured to form a guiding channel, with all the guiding channels aligned to ensure the smooth passage of the bonding wire and to direct it precisely to the bonding tool 15. Specifically, the first wire guiding block 210 forms a first guiding channel 210a for directing the bonding wire between the air tensioner 11 and the first clamp 12 during a threading process, and a first slot 210b connected to the first guiding channel 210a to release the bonding wire after the threading process. The second wire guiding block 220 forms a second guiding channel 220a for directing the bonding wire between the first clamp 12 and the second wire clamp 13 during the threading process, and a second slot 220b connected to the second guiding block 220a to release the bonding wire after the threading process. The third wire guiding channel 230 forms a third guiding channel 230a for directing the bonding wire between the second wire clamp 12 and the bonding tool 15 during the threading process, and a third slot 230b connected to the third guiding channel 230a to release the bonding wire after the threading process. All of the first, second, and third guiding channels are aligned with the through apertures or holes of the air tensioner 11 and the bonding tool 15 to form a complete guiding channel for threading the bonding wire from the air tensioner 11 through the bonding tool 15 via the first and second wire clamps, 12, 13.

Referring to FIG. 4A, the wire threading device 200 may further include a vacuum suction device 240 coupled to the bonding tool 15 to further facilitate the threading of the bonding wire.

In this embodiment, both the first slot 210b formed in the first wire guiding block 210 and the second slot 220b formed in the second wire guiding block 220 may be closed to prevent the bonding wire from flying out of the first and second guiding channels, 210a, 220a during the threading process.

Referring to FIG. 4B and FIG. 4C, the first wire guiding block 210 includes a first part 211 and a second part 212. Each part has an elongated groove 211a along its length. As shown in FIG. 4C, which illustrates the shape of the elongated groove 211a, the elongated groove 211a includes a top tapered portion and a bottom tapered portion. The top tapered portion has a wider opening that gradually narrows, ensuring smooth guidance of the bonding wire into the first guiding channel 210a of the first wire guiding block 210. Meanwhile, the bottom tapered portion has a narrower opening at its end for precisely directing the bonding wire toward the first wire clamp 12. The second part 212 has a similar elongated groove along its length.

Similarly, the second wire guiding block 220 includes a first part 221 and a second part 222. Each part has an elongated groove similar to the elongated groove 211a, and thus need not be described in detail.

Referring to FIG. 4B, the wire threading device 200 also includes a first actuation mechanism 213 coupled to the first wire guiding block 210 and a second actuation mechanism 223 coupled to the second wire guiding block 220. The first actuation mechanism 213 is configured to move the second part 212 of the first wire guiding block 210 relative to the first part 211 to open or close the first slot 210b. The second actuation mechanism 223 is configured to move the second part 222 of the second wire guiding block 220 relative to the first part 221 of the second wire guiding block 220 to open or close the second slot 220b.

Each actuation mechanism may include either a pneumatic or an electronic actuator. In some embodiments, each actuation mechanism also includes an elastic component coupled to the wire guiding block, along with an actuation air channel formed within the block. When compressed air is introduced through the actuation air channel, it deforms the elastic component, causing the slot formed in the wire guiding block to open or close. The elastic component may be a spring or a pair of leaf springs. Specifically, If the slot is initially open, the compressed air deforms the elastic component, moving one part of the wire guiding block relative to the other and thereby closing the slot. Conversely, if the slot is initially closed, the compressed air deforms the elastic component, causing relative movement between the two parts of the wire guiding block, thereby opening the slot.

FIG. 4D schematically illustrates a sectional view of the first wire guiding block 210 according to one embodiment of the invention. Referring to FIG. 4D, the first actuation mechanism 213 includes an actuation air channel 215 formed in the first part 211 and coupled to the second part 212 via a seal ring 213a. When compressed air is input through the actuation air channel 215, the second part 212 moves relative to the first part 211 between a first position where the first and second parts of the first wire guiding block 210 align and contact each other to close the first slot 210b, and a second position where the first and second parts, 211, 212 separate to open the first slot 210b. The configuration of the first actuation mechanism 213 in FIG. 4D is for illustrative purposes only and is not intended to limit the scope of the invention. The position, shape, and dimensions of the actuation air channel 215 and the seal ring 213a may be adjusted as needed in other embodiments of the invention.

The wire threading device also includes a first pneumatic wire pulling mechanism coupled to the first wire guiding block 210 and a second pneumatic wire pulling mechanism coupled to the second wire guiding block 220. Referring to FIG. 4D, the first pneumatic wire pulling mechanism includes two air channels, 211b and 212b, arranged along directions substantially perpendicular to the axial direction of the first guiding channel 210a in the first wire guiding block 210 and is configured to apply balanced pulling forces on the bonding wire via the two air channels, 211b, 212b enabling the bonding wire to be pulled into and through the first guiding channel 210a during the threading process. Similar to the air channels shown in FIG. 2E, each of the two air channels, 211b and 212b, is arranged in an L-shape.

During a threading process, the first pneumatic wire pulling mechanism is operative to generate an airflow with substantially equal flow rates in the first and second air channels, 211b, 212b to apply balanced pulling forces on the bonding wire, effectively pulling the bonding wire into and through the first guiding channel 210b.

As shown in FIG. 4D, the first pneumatic wire pulling mechanism further includes an airflow regulator R positioned in the first air channel 211b to control the flow rate therein. The airflow regulator R includes a movable stopper portion that can be inserted into the first air channel 211b to adjust the size of an air passage therein. The stopper portion may be configured to move relative to the first air channel 211b in a direction perpendicular to the direction of the airflow, thereby adjusting the size of the air passage in the first air channel 211b. In other embodiments, at least one airflow regulator may be positioned in the second air channel 212b to control the flow rate therein.

Similarly, the second pneumatic wire pulling mechanism includes two air channels arranged along directions substantially perpendicular to the axial direction of the second guiding channel 220a in the second wire guiding block 220 and is configured to apply balanced pulling forces on the bonding wire via the two air channels, enabling the bonding wire to be pulled into and through the second guiding channel 220a during the threading process. As the second pneumatic wire pulling mechanism is similar to the first one in terms of functions, components, and structure, a detailed description of the same is omitted.

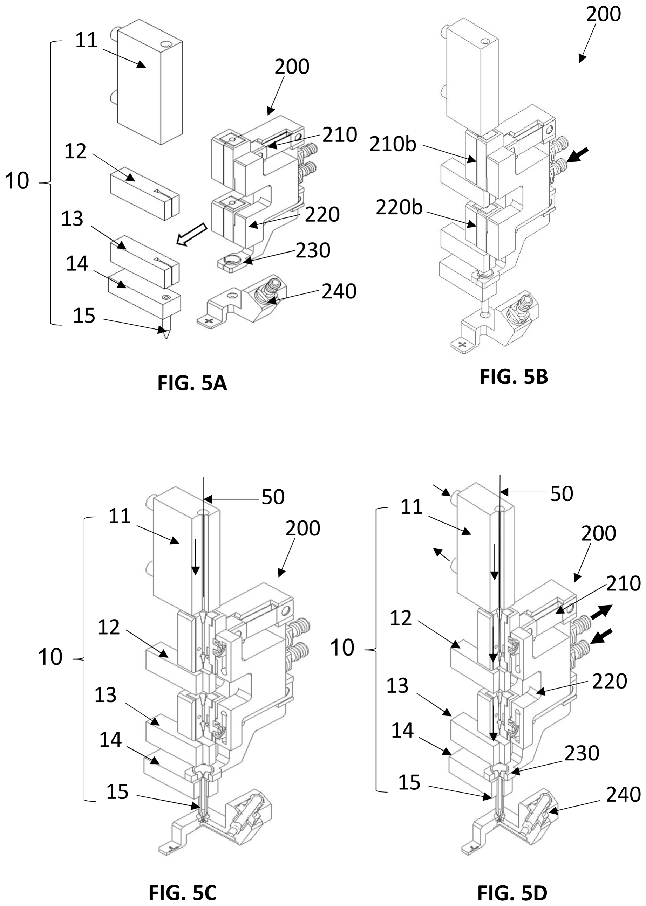

FIG. 5A to FIG. 5G illustrate the main steps performed by the wire threading device 200 during the threading of a bonding wire 50 through the wire bonding apparatus 10, according to one embodiment of the invention.

In FIG. 5A, a motion controller moves the wire threading device 200 from its standby position to its operation position. Specifically, the wire threading device 200 is positioned at the operation location such that the first wire guiding block 210 is inserted into a first operation position between the air tensioner 11 and the first wire clamp 12, the second guiding block 220 is inserted into a second operation position between the first and second wire clamps, 12, 13 and the third guiding block 230 is inserted into a second operation position between the second wire clamp 13 and the bonding tool 15. The vacuum sucker 240 is coupled to the bonding tool 15. When the wire threading device 200 is positioned at the operation position, the guiding channels formed in the wire threading device 20 are aligned with the through apertures in the air tensioner 11 and bonding tool 15.

To further prevent the bonding wire from flying out of the wire threading device 200, the wire threading device 200 is positioned at the operation position such that there is an offset angle between the opening and closing directions of the first slot 210b and the gripping direction of the first and second wire clamps, 12, 13 for gripping the bonding wire 50. The offset angle may range from 10 degrees to 90 degrees. The gripping direction refers to the opening and closing directions of the two wire clamps, 12, 13.

In FIG. 5B, the first slot 210b and second slot 220b are closed by the first and second actuation mechanisms respectively. Specifically, the first actuation mechanism moves one part of the first wire guiding block 210 relative to the other from a first position (its initial position) where the first slot 210b is open to a second position where the first slot 210b is closed by introducing compressed air into the actuation air channel formed in the first wire guiding block 210. Similarly, the second actuation mechanism moves one part of the second wire guiding block 220 relative to the other part from a first position (its initial position) where the second slot 220b is opened to a second position where the second slot 220b is closed by introducing compressed air into the actuation air channel formed in the second wire guiding block 220.

In FIG. 5C, the bonding wire 50 is threaded through the air tensioner 11.

In FIG. 5D, the first and second pneumatic wire pulling mechanisms of the wire threading device 200 are turned on to receive the bonding wire 50 from the air tensioner 11 and sequentially guide it into and through the first, second and third guiding channels formed in the first, second and third wire guiding blocks, 210, 220 and 230.

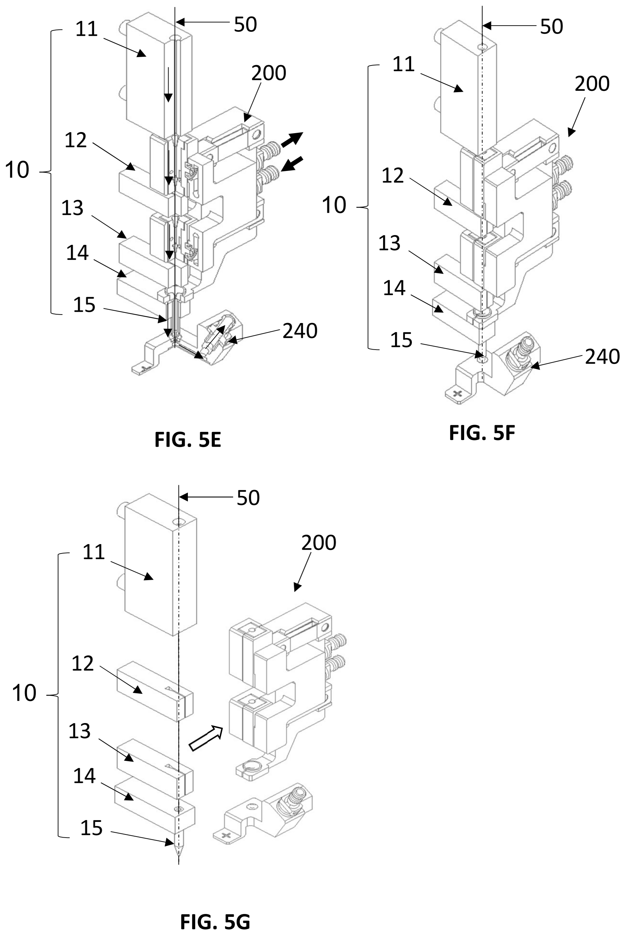

In FIG. 5E, the vacuum suction device 240 is turned on to draw the bonding wire 50 towards the bonding tool 15.

In FIG. 5F, the first and second wire clamps, 12, 13, are operative to clamp the bonding wire 50 after it has been threaded through the bonding tool 15. After the bonding wire 50 is clamped by the first and second wire clamps 12, 13, all the pneumatic wire pulling mechanisms, actuation mechanisms and the vacuum suction device 240 are turned off. The first slot 210b and the second slot 220b are opened after the introduction of the compressed air is stopped by turning off the first and second actuation mechanisms. Specifically, after the first actuation mechanism is turned off, the movable part of the first wire guiding block 210 returns to its first position (initial position) so that the first slot 210b is open, and after the second actuation mechanism is turned off, the second wire guiding block 210 returns to its first position (initial position) so that the second slot 220b is opened.

In FIG. 5G, the wire threading device 200 releases the bonding wire via the first slot 210b, second slot 220b, and third slot 230b and moves from the operation position back to its standby position.

As described above, embodiments of the invention provide a wire threading device for automatically threading a bonding wire from an air tensioner through a bonding tool of a wire bonding apparatus. The proposed wire threading device includes a plurality of wire guiding blocks, each wire guiding block being configured to form a guiding channel for directing the bonding wire during a threading process and a slot connected to the guiding channel to release the bonding wire after the threading process is completed. To effectively pull the bonding wire into the guiding channels and to prevent the bonding wire from flying out of the guiding channels during the threading process, the wire threading device is configured to include at least one pneumatic wire pulling mechanism. Each pneumatic wire pulling mechanism is coupled to a wire guiding block and configured to apply balanced pulling forces on the bonding wire through a plurality of air channels extending in directions that intersect an axial direction of the guiding channel in the wire guiding block. To further enhance the reliability and efficiency of the threading process, at least one of the wire guiding blocks is configured to include two separate parts, wherein at least one part is movable relative to the other to close its slot during threading and to open it after threading to release the bonding wire.

Although the present invention has been described in considerable detail with reference to certain embodiments, other embodiments are possible. Therefore, the spirit and scope of the appended claims should not be limited to the description of the embodiments contained herein.

## Claims

1. A device for automatically threading wire in a wire bonding apparatus, the device comprising:
a wire guiding block configured to form a guiding channel for directing a bonding wire during a threading process and a slot connected to the guiding channel to release the bonding wire from the guiding channel after the threading process, the wire guiding block being positioned between an air tensioner and a bonding tool of the wire bonding apparatus in use to guide the bonding wire from the air tensioner to the bonding tool, and
a pneumatic wire pulling mechanism comprising a plurality of air channels extending in directions that intersect an axial direction of the guiding channel in the wire guiding block, the pneumatic wire pulling mechanism being configured to apply a plurality of pulling forces on the bonding wire via the plurality of air channels, enabling the bonding wire to be pulled into and through the guiding channel during the threading process.

2. The device according to claim 1, wherein the pneumatic wire pulling mechanism comprises a pair of air channels symmetrically arranged relative to the guiding channel in the wire guiding block, the pneumatic wire pulling mechanism being configured to generate an airflow having substantially equal flow rates in the pair of air channels to pull the bonding wire into and through the guiding channel, wherein optionally each of the pair of air channels has a first section extending along a first direction and a second section extending along a second direction perpendicular to the first direction.

3. The device according to claim 2, wherein the pneumatic wire pulling mechanism further comprises at least one airflow regulator positioned in one or both of the pair of air channels to control the flow rate therein, wherein each airflow regulator optionally includes a stopper portion that is insertable into the corresponding air channel to adjust a size of an air passage therein.

4. The device according to claim 2, wherein the pneumatic wire pulling mechanism is configured to ensure that the flow rate in each of the plurality of air channels does not exceed 5L/min.

5. The device according to claim 1, wherein the wire guiding block includes two separate parts, wherein at least one part is movable relative to the other between a first position where the slot is open and a second position where the slot is closed, wherein the device further comprises an actuation mechanism coupled to the wire guiding block and configured to move at least one part relative to the other.

6. The device according to claim 5, wherein the actuation mechanism includes a rotary shaft coupled to the wire guiding block, which allows one part of the wire guiding block to move relative to the other, or an elastic component coupled to the wire guiding block and an actuation air channel formed in the wire guiding block, the elastic component being deformable by compressed air input through the actuation air channel to open or close the slot of the wire guiding block.

7. The device according to claim 1, further comprising a motion controller configured to position the wire guiding block at an operation position between the air tensioner and the bonding tool before threading such that there is an offset angle between an opening direction of the slot and opening directions of the first and second wire clamps of the wire bonding apparatus.

8. The device according to claim 7, wherein the motion controller is further configured to position the wire guiding block at the operation position such that the opening direction of the slot is substantially perpendicular to the opening directions of the first and second wire clamps.

9. The device according to claim 1, further comprising a vacuum suction device connected to the bonding tool, and configured to exert a drawing force on the bonding wire to facilitate its threading through the bonding tool.

10. The device according to claim 1, wherein the wire guiding block is positioned between the air tensioner and a first wire clamp of the wire bonding apparatus, the first wire clamp and a second wire clamp, or the second wire clamp and the bonding tool during the threading process.

11. A wire threading device for automatically threading wire in a wire bonding apparatus, the wire threading device comprising:
a first wire guiding block configured to form a first guiding channel for directing a bonding wire during a threading process and a first slot connected to the first guiding channel to release the bonding wire from the first guiding channel after the threading process, the first wire guiding block being positioned between the air tensioner and a first wire clamp in use,
a second wire guiding block configured to form a second guiding channel for directing the bonding wire during the threading process and a second slot connected to the second guiding channel to release the bonding wire from the second guiding channel after the threading process, the second wire guiding block being positioned between the first wire clamp and a second wire clamp in use,
a third wire guiding block configured to form a third guiding channel for directing the bonding wire during the threading process and a third slot connected to the third guiding channel to release the bonding wire from the third guiding channel after the threading process, the third wire guiding block being positioned between the second wire clamp and the bonding tool of the wire bonding apparatus in use, and
a pneumatic wire pulling mechanism comprising first and second air channels extending in directions that intersect an axial direction of the first guiding channel in the first wire guiding block and/or third and fourth air channels extending in directions that intersect an axial direction of the second guiding channel in the second wire guiding block, the pneumatic wire pulling mechanism being configured to apply a plurality of pulling forces on the bonding wire via the first and second, and/or third and fourth air channels, enabling the bonding wire to be pulled into and through the first and/or second guiding channel during the threading process.

12. The device according to claim 11, wherein the pneumatic wire pulling mechanism is configured to generate an airflow having substantially equal flow rates in the first and second air channels to pull the bonding wire into and through the first guiding channel, and/or in the third and fourth air channels to pull the bonding wire into and through the second guiding channel.

13. The device according to claim 11, wherein the first wire guiding block comprises two parts, wherein at least one part is movable relative to the other between a first position where the first slot is open and a second position where the first slot is closed, wherein the device further comprises a first actuation mechanism coupled to the first wire guiding block and configured to move at least one part relative to the other, and/or wherein the second wire guiding block comprises two parts, wherein at least one part is movable relative to the other between a first position where the second slot is open and a second position where the second slot is closed, wherein the device further comprises a second actuation mechanism coupled to the second wire guiding block and configured to move at least one part relative to the other.

14. The device according to claim 11, further comprising a motion controller configured to position the first through third wire guiding blocks at respective operation positions before threading the bonding wire such that there is an offset angle between an opening or closing direction of the first through third slots and opening or closing direction of the first and second wire clamps of the wire bonding apparatus, and optionally the motion controller is further configured to position the first, second and third wire guiding blocks at respective operation positions such that the opening and closing directions of the first, second and third slots are substantially perpendicular to the opening and closing directions of the first and second wire clamps.

15. A method for automatically threading wire in a wire bonding apparatus, the method comprising:
providing a wire threading device that comprises a wire guiding block forming a guiding channel and a slot connected to the guiding channel and a pneumatic wire pulling mechanism comprising a plurality of air channels extending in directions that intersect an axial direction of the guiding channel in the wire guiding block,
positioning the wire guiding block at an operation position between an air tensioner and a bonding tool of the wire bonding apparatus to guide a bonding wire through the guiding channel from the air tensioner to the bonding tool during a threading process,
applying a plurality of pulling forces on the bonding wire with the pneumatic wire pulling mechanism via the plurality of air channels to pull the bonding wire into and through the guiding channel during the threading process, and
moving the wire guiding block away from the operation position and releasing the bonding wire via the slot.
